# EUROPÄISCHE PATENTSCHRIFT

(11) **EP 2 794 317 B1**
(45) Veröffentlichungstag und Bekanntmachung des Hinweises auf die Patenterteilung: **13.07.2016**
(21) Anmeldenummer: 12780754.3
(22) Anmeldetag: 05.11.2012
(51) Int. Cl.: B60K 6/48, B60K 6/547, B60W 20/00, B60W 10/02, B60W 10/113, B60W 10/08

(54) **HYBRIDANTRIEB EINES KRAFTFAHRZEUGS UND VERFAHREN ZUM BETREIBEN DESSELBEN**
HYBRID DRIVE OF A MOTOR VEHICLE AND METHOD FOR OPERATING SAME
ENTRAÎNEMENT HYBRIDE D'UN VÉHICULE AUTOMOBILE ET SON PROCÉDÉ DE FONCTIONNEMENT

(30) Priorität: 21.12.2011 DE 102011089466
(43) Veröffentlichungstag der Anmeldung: 29.10.2014
(73) Patentinhaber: ZF Friedrichshafen AG, 88038 Friedrichshafen (DE)
(72) Erfinder: KALTENBACH, Johannes, 88048 Friedrichshafen (DE); GRIESMEIER, Uwe, 88677 Markdorf (DE)
(86) Internationale Anmeldenummer: PCT/EP2012/071795
(87) Internationale Veröffentlichungsnummer: WO 2013/091969

(56) Entgegenhaltungen:
- WO-A1-2010/007291
- DE-A1- 19 850 549
- JP-A- 2010 179 868
- US-A1- 2010 282 531
- BERGER R ET AL: "ESG - Elektrisches Schaltgetriebe", ATZ AUTOMOBILTECHNISCHE ZEITSCHRIFT, VIEWEG PUBLISHING, WIESBADEN, DE, Bd. 107, Nr. 6, 1. Juni 2005 (2005-06-01), Seiten 488-493, XP001519133, ISSN: 0001-2785

## Beschreibung

Die Erfindung betrifft einen Hybridantrieb eines Kraftfahrzeugs nach dem Oberbegriff des Patentanspruchs 1. Des Weiteren betrifft die Erfindung Verfahren zum Betreiben eines solchen Hybridantriebs.

Aus der DE 198 50 549 A1 ist ein Kraftfahrzeug mit einem Hybridantrieb bekannt, wobei der Hybridantrieb einen Verbrennungsmotor, eine elektrische Maschine und ein als Doppelkupplungsgetriebe ausgebildetes Getriebe umfasst. Das Doppelkupplungsgetriebe des Hybridantriebs der DE 198 50 549 A1 verfügt über zwei Teilgetriebe, die jeweils eine separate Eingangswelle und eine gemeinsame Ausgangswelle aufweisen, wobei nach diesem Stand der Technik jeder Eingangswelle eine reibschlüssige Kupplung zugeordnet ist, um den Verbrennungsmotor an die jeweilige Eingangswelle des jeweiligen Teilgetriebes anzukoppeln. Die Teilgetriebe des Doppelkupplungsgetriebes gemäß DE 198 50 549 A1 verfügen über formschlüssige Schaltelemente, über die beide Eingangswellen selektiv mit der gemeinsamen Ausgangswelle gekoppelt werden können. An wenigstens eine Eingangswelle wenigstens eines Teilgetriebes ist eine elektrische Maschine angekoppelt.

Hiervon ausgehend liegt der vorliegenden Erfindung die Aufgabe zu Grunde, einen neuartigen Hybridantrieb eines Kraftfahrzeugs und Verfahren zum Betreiben eines solchen Hybridantriebs zu schaffen.

Diese Aufgabe wird durch einen Hybridantrieb gemäß Patentanspruch 1 gelöst. Erfindungsgemäß sind der ersten Einganswelle mehrere Kupplungen derart zugeordnet sind, dass dann, wenn eine erste, reibschlüssige oder formschlüssige Kupplung und eine in Reihe zwischen dieselbe und das erste Teilgetriebe geschaltete zweite, reibschlüssige Kupplung beide geschlossen sind, der Verbrennungsmotor an die erste Eingangswelle und an das erste Teilgetriebe gekoppelt ist, wohingegen dann, wenn zumindest eine der Kupplungen geöffnet ist, der Verbrennungsmotor von der ersten Eingangswelle und von dem ersten Teilgetriebe abgekoppelt ist, wobei der zweiten Eingangswelle ein formschlüssiges Schaltelement derart zugeordnet ist, dass dann, wenn dasselbe geschlossen ist, die elektrische Maschine an einen zwischen den Kupplungen verlaufenden Wellenabschnitt gekoppelt ist.

Mit dem erfindungsgemäßen Hybridantrieb ist es möglich, unter Nutzung einer einzigen elektrischen Maschine und demnach unter Verzicht auf eine zweite elektrische Maschine eine Vielzahl von Hybridfunktionen zu nutzen, so zum Beispiel rein elektrisches Fahren ohne Schleppverluste an einer offenen Kupplung, aktives Synchronisieren zumindest einiger Schaltelemente über die elektrische Maschine, Zustarten des Verbrennungsmotors über die elektrische Maschine im Stillstand des Kraftfahrzeugs, Zustarten des Verbrennungsmotors über die elektrische Maschine aus rein elektrischer Fahrt heraus ohne Zugkraftunterbrechung, verzögerungsfreies Anfahren bzw. Ankriechen aus einem generatorischen Betrieb der elektrischen Maschine und demnach einem Ladebetrieb derselben heraus, Ausführung von Lastschaltungen bei verbrennungsmotorischer Fahrt unter Nutzung der elektrischen Maschine als Lastschaltelement sowie Ausführung von Lastschaltungen bei rein elektrischer Fahrt, gegebenenfalls unter gleichzeitigem Zustarten des Verbrennungsmotors. Weiterhin können Boosten und Rekuperieren als Hybridfunktionen bereitgestellt werden.

Die meisten dieser Funktionen sind auch dann ausführbar, wenn die erste Kupplung als formschlüssige Kupplung ausgebildet ist. Einige Funktionen erfordern jedoch, dass die erste Kupplung als reibschlüssige Kupplung ausgebildet ist.

Erfindungsgemäße Verfahren zum Betreiben eines solchen Hybridantriebs sind in Patentansprüchen 6 bis 14 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema eines erfindungsgemäßen Hybridantriebs eines Kraftfahrzeugs; und
- Fig. 2: ein weiteres Schema eines erfindungsgemäßen Hybridantriebs eines Kraftfahrzeugs.

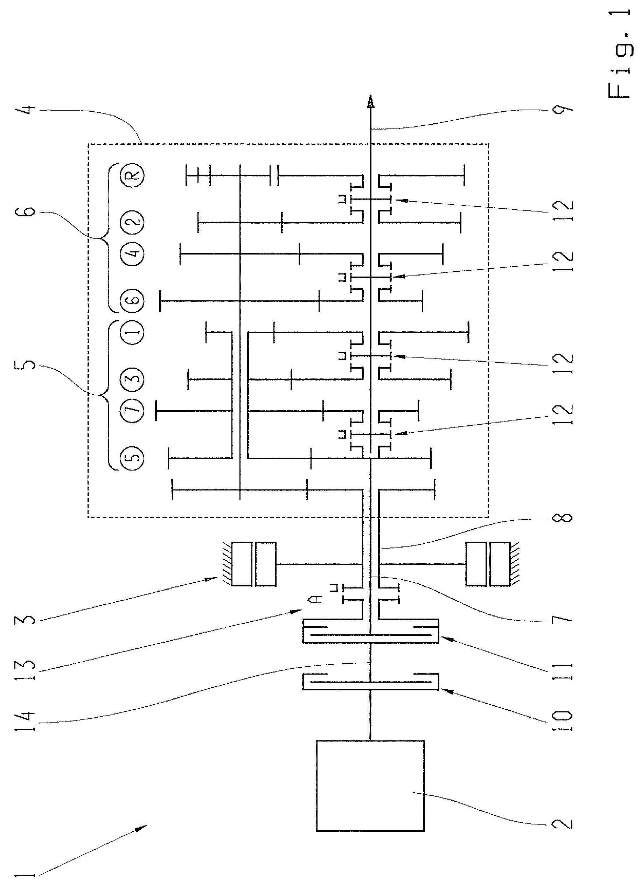

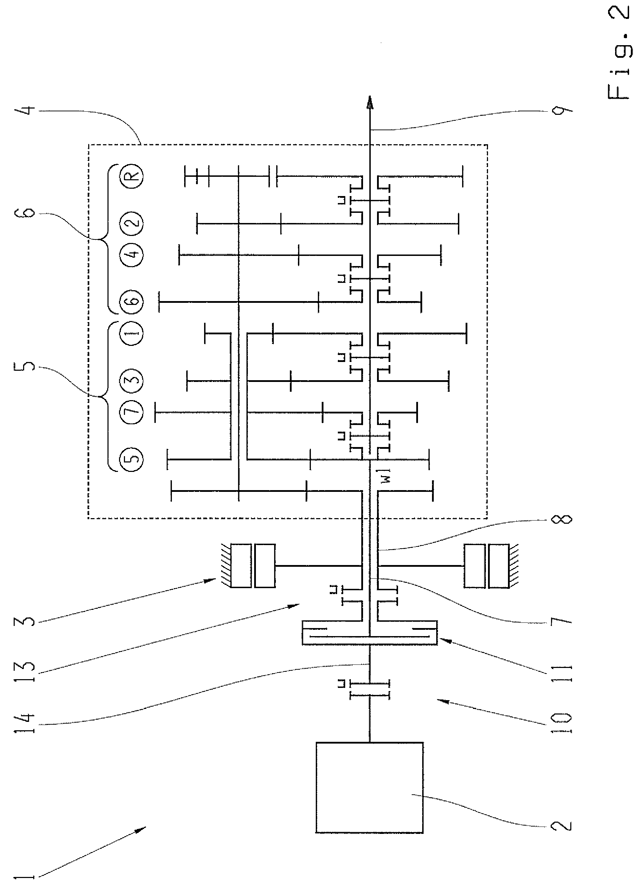

Fig. 1 und 2 zeigen bevorzugte Ausführungsformen eines erfindungsgemäßen Hybridantriebs 1 eines Kraftfahrzeugs, wobei der Hybridantrieb 1 einen Verbrennungsmotor 2, eine elektrische Maschine 3 und ein Getriebe 4 umfasst.

Das Getriebe 4 ist als mehrstufiges Schaltgetriebe mit zwei Teilgetrieben 5 und 6 ausgebildet, wobei die beiden Teilgetriebe 5 und 6 jeweils eine separate Eingangswelle 7 bzw. 8 und eine gemeinsame Ausgangswelle 9 aufweisen.

Das erste Teilgetriebe 5 stellt im Ausführungsbeispiel der Fig. 1 die Vorwärtsgänge "1 ", "3", "5" und "7" bereit. Das zweite Teilgetriebe 6 stellt im gezeigten Ausführungsbeispiel die Vorwärtsgänge "2", "4" und "6" sowie den Rückwärtsgang "R" bereit.

Das Getriebe 4 mit den beiden Teilgetrieben 5 und 6 verfügt gemäß Fig. 1 über mehrere zu Schaltpaketen 12 zusammengefasste, formschlüssige Schaltelemente, über die jede der beiden Eingangswellen 7 und 8 der beiden Teilgetriebe 5 und 6 selektiv an die Ausgangswelle 9 des Getriebes 4 angekoppelt werden kann, wobei die Ausgangswelle 9 des Getriebes 4 auf einen Abtrieb wirkt.

An dieser Stelle sei darauf hingewiesen, dass im gezeigten, bevorzugten Ausführungsbeispiel die beiden Eingangswellen 7 und 8 der beiden Teilgetriebe 5 und 6 koaxial zueinander angeordnet sind. Dabei greift die elektrische Maschine 3 an der äußeren Eingangswelle 8 des zweiten Teilgetriebes 6 an, nämlich in Fig. 1 unmittelbar. Es kann jedoch zwischen diese Eingangswelle 8 des zweiten Teilgetriebes 6 und die elektrische Maschine 3 auch eine Konstantübersetzungsstufe geschaltet sein.

Der Verbrennungsmotor 2 ist an die erste Eingangswelle 7 und damit das erste Teilgetriebe 5 ankoppelbar sowie von demselben abkoppelbar, wohingegen die elektrische Maschine 3 an die zweite Eingangswelle 8 und damit an das zweite Teilgetriebe 6 fest gekoppelt ist.

Der ersten Eingangswelle 7 des ersten Teilgetriebes 5 sind mehrere Kupplungen 10, 11 zugeordnet, nämlich zwei in Reihe geschaltete Kupplungen 10, 11, wobei eine erste Kupplung 10 zwischen den Verbrennungsmotor 2 und die zweite Kupplung 11 und die zweite Kupplung 11 zwischen die erste Kupplung 10 und das erste Teilgetriebe 5 geschaltet ist.

Die erste Kupplung 10 ist entweder eine reibschlüssige Kupplung 10 (siehe Fig. 1) oder eine formschlüssige Kupplung 10 (siehe Fig. 2). Die zweite Kupplung 11 ist eine reibschlüssige Kupplung 11.

Dann, wenn beide in Reihe geschalteten Kupplungen 10 und 11 geschlossen sind, ist der Verbrennungsmotor 2 an die erste Eingangswelle 7 und damit an das erste Teilgetriebe 5 gekoppelt. Dann hingegen, wenn zumindest eine der Kupplungen 10 und 11 geöffnet ist, ist der Verbrennungsmotor 2 von der ersten Eingangswelle 7 und damit vom ersten Teilgetriebe 5 abgekoppelt.

Der zweiten Eingangswelle 8 des Teilgetriebes 6 ist keine reibschlüssige Kupplung zugeordnet, sondern ein formflüssiges Schaltelement 13, und zwar derart, dass dann, wenn das formschlüssige Schaltelement 13 geschlossen ist, die elektrische Maschine 3 an einen zwischen den Kupplungen 10 und 11 verlaufenden Wellenabschnitt 14, der bei geschlossener zweiter Kupplung 11 an die erste Eingangswelle 7 gekoppelt ist, angebunden ist ist, wohingegen dann, wenn das formschlüssige Schaltelement 13 geöffnet ist, die elektrische Maschine 3 von diesem Wellenabschnitt 14 abgekoppelt ist.

Dann, wenn das formschlüssige Schaltelement 13 und die erste Kupplung 10 beide geschlossen sind sowie die zweite Kupplung 11 geöffnet ist, ist die elektrische Maschine 3 an den Verbrennungsmotor 2 und damit der Verbrennungsmotor 2 zusammen mit der elektrischen Maschine 3 an die zweite Eingangswelle 8 des zweiten Teilgetriebes 6 gekoppelt, wohingegen dieselben von der ersten Eingangswelle 7 des ersten Teilgetriebes 5 abgekoppelt sind. Dann, wenn das formschlüssige Schaltelement 13 und die zweite Kupplung 11 beide geschlossen sind sowie die erste Kupplung 10 geöffnet ist, ist die elektrische Maschine 3 sowohl an die erste Eingangswelle 7 des ersten Teilgetriebes 5 als auch an die zweite Eingangswelle 8 des zweiten Teilgetriebes 6 gekoppelt. Dann, wenn beide Kupplungen 10, 11 geschlossen sind, ist der Verbrennungsmotor 2 an die erste Eingangswelle 7 und damit an das erste Teilgetriebe 5 angekoppelt, wobei die elektrische Maschine 3 bei geschlossenem Schaltelement 13 an beide Eingangswellen 7, 8 der Teilgetriebe 5, 6 gekoppelt und bei geöffnetem Schaltelement 13 ausschließlich an die zweite Eingangswelle 8 des zweiten Teilgetriebes 6 gekoppelt ist.

Mit dem erfindungsgemäßen Hybridantrieb ist ein rein elektrisches Fahren ohne Schleppverluste einer offenen Kupplung möglich, auch dann, wenn die erste Kupplung 10 reibschlüssig ist. Hierzu wird im ersten Teilgetriebe 5 vorzugsweise eine Neutralposition eingelegt, das Schaltelement 13 wird geöffnet, im zweiten Teilgetriebe 6 wird ein Gang eingelegt, wobei die Schaltstellung der beiden Kupplungen 10 und 11 in dem Fall dieses rein elektrischen Fahrens beliebig gewählt werden kann. Die elektrische Maschine 3 treibt dann über das zweite Teilgetriebe 6 an, die Kupplungen 10 und 11 drehen nicht mit, sodass dann an denselben keine Schleppverluste beim rein elektrischen Fahren entstehen.

Ferner können beim erfindungsgemäßen Hybridantrieb 1 mithilfe der elektrischen Maschine 3 Schaltelemente aktiv synchronisiert werden. So ist es möglich, die zu den Schaltpaketen 12 zusammengefassten Schaltelemente des zweiten Teilgetriebes 6 aktiv in einem drehzahlgeregelten Betrieb der elektrischen Maschine 3 über dieselbe zu synchronisieren.

Die zu den Schaltpaketen 12 zusammengefassten Schaltelemente des ersten Teilgetriebes 5 sowie das formschlüssige Schaltelement 13 können nicht über die elektrische Maschine 3 synchronisiert werden, wenn die elektrische Maschine 3 gerade als Fahrantrieb dient. Vielmehr werden dieselben auf andere Art und Weise synchronisiert, so zum Beispiel über eine Drehzahlregelung des Verbrennungsmotors 2 bei geschlossener erster Kupplung 10 bzw. teilweise geschlossener zweiter, reibschlüssiger Kupplung 11.

Im Stillstand des Kraftfahrzeugs ist beim erfindungsgemäßen Hybridantrieb ein Zustarten des Verbrennungsmotors 2 des Hybridantriebs möglich, und zwar sowohl ein Direktstart des Verbrennungsmotors 2 als auch ein Schwungstart des Verbrennungsmotors 2. Bei einem Direktstart des Verbrennungsmotors 2 des Hybridantriebs wird das Schaltelement 13 geschlossen, im zweiten Teilgetriebe 6 wird eine Neutralposition eingelegt. Weiterhin wird im ersten Teilgetriebe 5 eine Neutralposition eingelegt und/oder die zweite Kupplung 11 wird geöffnet. Die erste Kupplung 10 wird geschlossen. Die elektrische Maschine 3 treibt dann den Verbrennungsmotor 1 zum Anschleppen desselben an. Dieser Direktstart ist nutzbar, wenn die erste Kupplung 10 reibschlüssig oder formschlüssig ist.

Zur Bereitstellung eines Schwungstarts des Verbrennungsmotors 2 bei stillstehendem Kraftfahrzeug wird ebenfalls das Schaltelement 13 geschlossen und im zweiten Teilgetriebe 6 eine Neutralposition eingelegt. Ferner wird wiederum im ersten Teilgetriebe 5 eine Neutralposition eingelegt und/oder die zweite Kupplung 11 geöffnet. Ferner ist die erste, in diesem Fall notwendigerweise reibschlüssige Kupplung 10 anfänglich geöffnet, wobei bei geöffneter Reibkupplung 10 die elektrische Maschine 3 auf eine definierte Impulsstartdrehzahl beschleunigt wird, um bei Erreichen dieser definierten Impulsstartdrehzahl die erste, reibschlüssige Kupplung 10 zu schließen und hierbei über einen Schwungstart den Verbrennungsmotor 2 zu starten.

Ferner ist beim erfindungsgemäßen Hybridantrieb 1 ein Zustarten des Verbrennungsmotors 2 ohne Zugkraftunterbrechung aus rein elektrischer Fahrt heraus möglich, und zwar auch bei geringen Fahrgeschwindigkeiten. Hierzu wird bei rein elektrischer Fahrt über das erste Teilgetriebe 5 mit einem im ersten Teilgetriebe 5 eingelegten Gang, bei zweiten Teilgetriebe 6 in Neutral, bei geschlossenem formschlüssigem Schaltelement 13, bei geöffneter erster, in diesem Fall notwendigerweise reibschlüssiger Kupplung 10 und bei geschlossener zweiter, reibschlüssiger Kupplung 11 die zweite, reibschlüssige Kupplung 11 durch Absenken der Übertragungsfähigkeit derselben in Schlupf gebracht und die Drehzahl der elektrischen Maschine 3 bedarfsweise bei geringen Fahrgeschwindigkeiten erhöht. Durch Schließen der ersten, reibschlüssigen Kupplung 10 kann der Verbrennungsmotor 2 zugestartet werden, wobei die zweite, reibschlüssige Kupplung 11 eine Schlupfentkopplung bereitstellt, da das Abtriebsmoment nur von der Übertragungsfähigkeit der zweiten Kupplung 11 abhängt. Hierdurch wird ein komfortables Zustarten des Verbrennungsmotors 2 gewährleistet. Nachfolgend kann die zweite Kupplung 11 unter Last synchronisiert und geschlossen werden.

Ferner ist ein verzögerungsfreies Anfahren bei einem Kraftfahrzeug mit einem erfindungsgemäßen Hybridantrieb 1 aus einem generatorischen Betrieb der elektrischen Maschine 3 und demnach aus einem Ladebetrieb der elektrischen Maschine 3 heraus möglich. Hierzu ist im generatorischen Betrieb bzw. Ladebetrieb der elektrischen Maschine 3 das formschlüssige Schaltelement 13 geschlossen, im zweiten Teilgetriebe 6 ist eine Neutralposition eingelegt und im ersten Teilgetriebe 5 ist ein Anfahrgang eingelegt. Weiterhin ist die erste Kupplung 10 geschlossen und die zweite Kupplung 11 geöffnet oder maximal bis zum Anlegepunkt derselben gschlossen. In diesem Fall arbeitet dann die elektrische Maschine 3 generatorisch zur Erzeugung einer elektrischen Leistung für zum Beispiel eine Bordnetzversorgung oder zum Aufladen eines elektrischen Energiespeichers des Kraftfahrzeugs. Aus diesem Zustand des Ladebetriebs der elektrischen Maschine 3 heraus kann durch weiteres Schließen der zweiten Kupplung 11 jeder Zeit verzögerungsfrei über die zweite Kupplung 11 ein Anfahren oder Ankriechen des Kraftfahrzeugs realisiert werden. Diese Funktion ist nutzbar, wenn die erste Kupplung 10 reibschlüssig oder formschlüssig ist.

Ferner können beim erfindungsgemäßen Hybridantrieb bzw. bei einem Kraftfahrzeug mit einem solchen Hybridantrieb Lastschaltungen unter Verwendung der elektrischen Maschine 3 als Lastschaltelement ausgeführt werden. So kann während eines lastfreien Gangwechsels im ersten Teilgetriebe 5 bei geöffnetem formschlüssigem Schaltelement 13 mit der elektrischen Maschine 3 über einen Gang des zweiten Teilgetriebes 6 ein Moment am Abtrieb des Kraftfahrzeugs bereitgestellt werden. Während einer solchen Schaltung im ersten Teilgetriebe 5 wird bedarfsweise eine der Kupplungen 10 bzw. 11 geöffnet, wobei das Öffnen der zweiten, reibschlüssigen Kupplung 11 bevorzugt ist, da dann im ersten Teilgetriebe 5 eine geringere Trägheitsmasse zu synchronisieren ist.

Eine Lastschaltung im zweiten Teilgetriebe 6 unter Beteiligung der elektrischen Maschine 3 als Lastschaltelement erfolgt nur dann, wenn der Verbrennungsmotor 2 über das erste Teilgetriebe 1 ein Abtriebsmoment bereitstellt.

Im Detail wird zur Ausführung eines Gangwechsels von einem Ist-Gang des ersten Teilgetriebes 5 in einen Ziel-Gang des zweiten Teilgetriebes 6 ausgehend von einer verbrennungsmotorischen Fahrt des Kraftfahrzeugs bei geschlossenen Kupplungen 10 und 11 und bei geöffnetem formschlüssigem Schaltelement 13 zur Gewährleistung einer Lastschaltung mit Verwendung der elektrischen Maschine 3 als Lastschaltelement so vorgegangen, dass zunächst der Ziel-Gang im zweiten Teilgetriebe 6 über die elektrische Maschine 3 synchronisiert und sodann eingelegt wird. Anschließend wird zur Gewährleistung eines Lastübergangs vom Verbrennungsmotor 2 auf die elektrische Maschine 3 an der elektrischen Maschine 3 Last aufgebaut und an dem Verbrennungsmotor 2 Last abgebaut sowie bedarfsweise mindestens eine der Kupplungen 10, 11, vorzugsweise die zweite, reibschlüssige Kupplung 11, geöffnet. Darauffolgend wird der Ist-Gang im ersten Teilgetriebe 5 ausgelegt und das formschlüssige Schaltelement 13 wird synchronisiert und geschlossen. Anschließend wird ein Lastübergang von der elektrischen Maschine 3 zurück auf den Verbrennungsmotor 2 durchgeführt, indem zeitlich überlappend an der elektrischen Maschine 3 Last abgebaut und an dem Verbrennungsmotor 2 Last aufgebaut sowie bedarfsweise die oder jede Kupplung 10, 11 geschlossen wird. Diese Funktion ist nutzbar, wenn die erste Kupplung 10 reibschlüssig oder formschlüssig ist.

Hiermit ist dann der Gangwechsel vom Ist-Gang des ersten Teilgetriebes 5 in einen Ziel-Gang des zweiten Teilgetriebes 6 abgeschlossen, wobei anschließend die Aufteilung eines angeforderten Fahrmoments zwischen Verbrennungsmotor 2 und elektrischer Maschine 3 entsprechend der Vorgabe einer Betriebsstrategie erfolgt.

Bei dem obigen Gangwechsel vom Ist-Gang des ersten Teilgetriebe 5 in den Ziel-Gang des zweiten Teilgetriebes 6 kann es sich zum Beispiel um einen Gangwechsel des Getriebes 4 vom Vorwärtsgang "1" in den Vorwärtsgang "2" oder vom Vorwärtsgang "3" in den Vorwärtsgang "4" oder vom Vorwärtsgang "5" in den Vorwärtsgang "6" handeln.

Zur Ausführung einer Lastschaltung unter Beteiligung der elektrischen Maschine 3 als Lastschaltelement unter Gewährleistung eines Gangwechsels von einem Ist-Gang des zweiten Teilgetriebes 6 in einen Ziel-Gang des ersten Teilgetriebes 5 wird ausgehend von einer verbrennungsmotorischen Fahrt des Kraftfahrzeugs bei geschlossenen Kupplungen 10 und 11 und bei geschlossenem formschlüssigem Schaltelement 13 zunächst ein Lastübergang vom Verbrennungsmotor 2 auf die elektrische Maschine 3 durchgeführt, indem zeitlich überlappend an der elektrischen Maschine 3 Last aufgebaut, am Verbrennungsmotor 2 Last abgebaut, das formschlüssige Schaltelement 13 geöffnet sowie bedarfsweise mindestens eine der Kupplungen 10, 11, insbesondere die zweite, reibschlüssige Kupplung 11, geöffnet wird. Darauffolgend wird der Ziel-Gang des ersten Teilgetriebes 5 synchronisiert und sodann derselbe eingelegt. Darauffolgend wird ein Lastübergang von der elektrischen Maschine 3 zurück auf den Verbrennungsmotor 2 durchgeführt, indem zeitlich überlappend an der elektrischen Maschine 3 Last abgebaut und am Verbrennungsmotor 2 Last aufgebaut sowie bedarfsweise die jeweilige Kupplung 10 und/oder 11 geschlossen wird. Anschießend kann bedarfsweise der Ist-Gang im zweiten Teilgetriebe 6 ausgelegt werden. Diese Funktion ist nutzbar, wenn die erste Kupplung 10 reibschlüssig oder formschlüssig ist.

Bei dem obigen Gangwechsel vom Ist-Gang des zweiten Teilgetriebes 6 in den Ziel-Gang des ersten Teilgetriebes 5 kann es sich zum Beispiel um einen Gangwechsel des Getriebes 4 vom Vorwärtsgang "2" in den Vorwärtsgang "3" oder vom Vorwärtsgang "4" in den Vorwärtsgang "5" oder vom Vorwärtsgang "6" in den Vorwärtsgang "7" handeln.

Dann, wenn eine Lastschaltung unter Beteiligung der elektrischen Maschine 3 als Lastschaltelement von einem Ist-Gang des ersten Teilgetriebes 5 in einen Ziel-Gang des ersten Teilgetriebes 5 ausgehend von einer verbrennungsmotorischen Fahrt des Kraftfahrzeugs bei geschlossenen Kupplungen 10 und 11 und bei geöffnetem formschlüssigem Schaltelement 13 auszuführen ist, wird zunächst im zweiten Teilgetriebe 6 ein Zwischengang synchronisiert und eingelegt. Anschließend erfolgt ein Lastübergang von dem Verbrennungsmotor 2 auf die elektrische Maschine 3 durch zeitlich überlappenden Lastaufbau an der elektrischen Maschine 3, Lastabbau am Verbrennungsmotor 2 sowie durch bedarfsweises Öffnen mindestens einer der Kupplungen 10, 11, vorzugsweise zumindest der zweiten, reibschlüssigen Kupplung 11. Darauffolgend wird der Ist-Gang im ersten Teilgetriebe 5 ausgelegt sowie der Ziel-Gang im ersten Teilgetriebe 5 synchronisiert und eingelegt. Anschließend wird zur Gewährleistung eines Lastübergangs von der elektrischen Maschine 3 zurück auf den Verbrennungsmotor 3 zeitlich überlappend an der elektrischen Maschine 3 Last abgebaut und an dem Verbrennungsmotor 2 Last aufgebaut sowie bedarfsweise die jeweilige Kupplung 10, 11 geschlossen. Anschließend kann bedarfweise im zweiten Teilgetriebe 6 der zuvor eingelegte Zwischengang ausgelegt werden. Diese Funktion ist nutzbar, wenn die erste Kupplung 10 reibschlüssig oder formschlüssig ist.

Bei dem obigen Gangwechsel vom Ist-Gang des ersten Teilgetriebes 5 in einen Ziel-Gang des ersten Teilgetriebes 5 kann es sich zum Beispiel um einen Gangwechsel vom Vorwärtsgang "1" in den Vorwärtsgang "3" oder vom Vorwärtsgang "3" in den Vorwärtsgang "5" oder vom Vorwärtsgang "5" in den Vorwärtsgang "7" handeln. Als Zwischengang wird dabei im zweiten Teilgetriebe 6 der Vorwärtsgang "2" für einen Gangwechsel vom Vorwärtsgang "1" in den Vorwärtsgang "3" eingelegt.

Dann, wenn ein Gangwechsel von einem Ist-Gang des zweiten Teilgetriebes 6 in einen Ziel-Gang des zweiten Teilgetriebes 6 ausgehend von einer verbrennungsmotorischen Fahrt des Kraftfahrzeugs bei geschlossenen Kupplungen 10 und 11 und bei geschlossenem formschlüssigen Schaltelement 13 auszuführen ist, wird zunächst an der elektrischen Maschine 3 Last aufgebaut, an dem Verbrennungsmotor 2 Last abgebaut, das formschlüssige Schaltelement 13 geöffnet sowie bedarfsweise mindestens eine der Kupplungen 10 und/oder 11 geöffnet, um einen Lastübergang von dem Verbrennungsmotor 2 auf die elektrische Maschine 3 zu realisieren. Anschließend wird ein Zwischengang des ersten Teilgetriebes 5 synchronisiert und eingelegt. Darauffolgend wird an der elektrischen Maschine 3 Last abgebaut und am Verbrennungsmotor 2 Last aufgebaut sowie bedarfsweise die jeweilige Kupplung 10 und/oder 11 geschlossen, um einen Lastübergang zurück auf den Verbrennungsmotor 2 zu realisieren. Darauffolgend wird der Ist-Gang des zweiten Teilgetriebes 6 ausgelegt sowie der Ziel-Gang des zweiten Teilgetriebes 6 synchronisiert und eingelegt. Zur Gewährleistung eines Lastübergangs vom Verbrennungsmotor 2 auf die elektrische Maschine 3 wird nachfolgend zeitlich überlappend an der elektrischen Maschine 3 nochmals Last aufgebaut und am Verbrennungsmotor 2 Last abgebaut sowie bedarfsweise mindestens eine der Kupplungen 10 und/ oder 11 geöffnet. Anschließend wird der Zwischengang des ersten Teilgetriebes 5 ausgelegt und das formschlüssige Schaltelement 13 wird synchronisiert und eingelegt. Anschließend erfolgt wiederum ein Lastübergang zurück von der elektrischen Maschine 3 auf den Verbrennungsmotor 2, in dem zeitlich überlappend an dem Verbrennungsmotor 2 Last aufgebaut, an der elektrischen Maschine 3 Last abgebaut sowie bedarfsweise die jeweilige Kupplung 10 und/oder 11 geschlossen wird. Diese Funktion ist nutzbar, wenn die erste Kupplung 10 reibschlüssig oder formschlüssig ist.

Bei dem obigen Gangwechsel vom Ist-Gang des zweiten Teilgetriebes 6 in einen Ziel-Gang des zweiten Teilgetriebes 6 kann es sich zum Beispiel um einen Gangwechsel vom Vorwärtsgang "2" in den Vorwärtsgang "4" oder vom Vorwärtsgang "4" in den Vorwärtsgang "6" handeln. Als Zwischengang wird dabei im ersten Teilgetriebe 5 der Vorwärtsgang "3" für einen Gangwechsel vom Vorwärtsgang "2" in den Vorwärtsgang "4" eingelegt.

Weitere Verfahren betreffen die Ausführung von Gangwechseln im rein elektrischen Betrieb.

Zur Ausführung eines Gangwechsels im Getriebe 4, insbesondere einer Zug-Hoch-Lastschaltung, im rein elektrischen Betrieb über das zweite Teilgetriebe 6 von einem Ist-Gang des zweiten Teilgetriebes 6 auf einen Ziel-Gang des ersten Teilgetriebes 5 wird davon ausgegangen, dass beide Kupplungen 10 und 11 anfänglich geöffnet sind, ebenso ist das formschlüssige Schaltelement 13 geöffnet. Sollten die Kupplungen 10 und 11 anfänglich nicht geöffnet sein, so werden dieselben geöffnet. Um nun eine Zug-Hoch-Lastschaltung im rein elektrischen Betrieb von einem Ist-Gang des zweiten Teilgetriebes 6 auf einen Ziel-Gang des ersten Teilgetriebes 5 auszuführen, wird zunächst der Ziel-Gang im ersten Teilgetriebe 5 synchronisiert und eingelegt. Darauffolgend wird das formschlüssige Schaltelement 13 synchronisiert und geschlossen. Im Anschluss erfolgt eine Lastübernahme über die die zweite Kupplung 11, indem die Übertragungsfähigkeit derselben vorzugsweise kontinuierlich erhöht wird, und zwar so lange, bis das zweite Teilgetriebe 6 lastfrei wird, um im zweiten Teilgetriebe 6 den Ist-Gang lastfrei auszulegen. Nachfolgend wird die zweite Kupplung 11 unter Last synchronisiert und dann völlig geschlossen. Mit dieser Vorgehensweise ist eine Zug-Hoch-Lastschaltung im rein elektrischen Betrieb vom zweiten Teilgetriebe 6 auf das erste Teilgetriebe 5 möglich. Eine Zug-Hoch-Schaltung und eine Schub-Rück-Schaltung sind von ihrem Ablauf her identisch, es ergibt sich lediglich eine Vorzeichenumkehr für die Momente. Es ist also auf analoge Weise eine Schub-Rück-Lastschaltung im rein elektrischen Betrieb vom zweiten Teilgetriebe 6 auf das erste Teilgetriebe 5 möglich. Diese Funktion ist nutzbar, wenn die erste Kupplung 10 reibschlüssig oder formschlüssig ist.

Um bei rein elektrischer Fahrt über das erste Teilgetriebe 5 bei geöffneter erster Kupplung 10, bei geschlossener zweiter Kupplung 11, bei geschlossenem formschlüssigem Schaltelement 13, bei einem im ersten Teilgetriebe 5 eingelegten Ist-Gang und beim zweiten Teilgetriebe 6 in Neutral einen Gangwechsel von dem Ist-Gang des ersten Teilgetriebes 5 auf einen Ziel-Gang des zweiten Teilgetriebes 6 auszuführen, wird zunächst die zweite, reibschlüssige Kupplung 11 durch Absenken der Übertragungsfähigkeit derselben in Schlupf gebracht, wobei anschließend der Ziel-Gang im zweiten Teilgetriebe 6 synchronisiert und eingelegt wird. Durch weiteres Absenken der Übertragungsfähigkeit der zweiten Kupplung 11 wird dieselbe vollständig geöffnet, sodass die Last über das zweite Teilgetriebe 6 geleitet wird. Bedarfsweise wird das formschlüssige Schaltelement 13 geöffnet und darauffolgend wird der Ist-Gang im ersten Teilgetriebe 5 ausgelegt. Dadurch können Schleppverluste an den Kupplungen 10 und 11 vermieden werden. Auf diese Art und Weise wird vorzugsweise eine Zug-Rück-Lastschaltung im rein elektrischen Betrieb vom Ist-Gang des ersten Teilgetriebes 5 auf den Ziel-Gang des zweiten Teilgetriebes 6 ausgeführt. Analog kann auch eine Schub-Hoch-Lastschaltung vom ersten Teilgetriebe 5 auf das zweite Teilgetriebe 6 durchgeführt werden. Diese Funktion ist nutzbar, wenn die erste Kupplung 10 reibschlüssig oder formschlüssig ist.

Weiterhin betrifft die Erfindung die Ausführung eines Gangwechsels, nämlich einer Zug-Hoch-Schaltung, im Getriebe 4 im rein elektrischen Betrieb unter gleichzeitigem Zustarten des Verbrennungsmotors 2, wobei im Ausgangszustand das formschlüssige Schaltelement 13 geöffnet ist, im zweiten Teilgetriebe 6 ein Gang eingelegt ist, um über das zweite Teilgetriebe 6 rein elektrisch zu fahren, wobei beide hier notwendigerweise reibschlüssigen Kupplungen 10 und 11 vorzugsweise geöffnet sind. Im ersten Teilgetriebe 5 wird sodann ein Ziel-Gang synchronisiert und eingelegt und nachfolgend wird das formschlüssige Schaltelement 13 ebenfalls synchronisiert und geschlossen. Durch kontinuierliches Anheben der Übertragungsfähigkeit der zweiten, reibschlüssigen Kupplung 11 erfolgt eine Lastübernahme über die reibschlüssige Kupplung 11, und zwar so lange, bis das zweite Teilgetriebe 6 lastfrei wird, sodass im zweiten Teilgetriebe 6 der Ist-Gang ausgelegt werden kann, sobald dasselbe lastfrei ist. Darauffolgend wird die zweite, reibschlüssige Kupplung 11 unter Last synchronisiert und zeitlich überlappend die erste, reibschlüssige Kupplung 10 geschlossen, um so den Verbrennungsmotor 2 anzuschleppen. Dabei wird die Trägheitsmasse der elektrischen Maschine 3 zum Anschleppen des Verbrennungsmotors 2 genutzt, wobei eine Schlupfentkopplung zum Abtrieb hin durch die zweite, reibschlüssige Kupplung 11 gewährleistet wird. Nachdem der Verbrennungsmotor 2 auf eine ausreichende Startdrehzahl angeschleppt wurde, kann die erste, reibschlüssige Kupplung 10 wieder geöffnet werden, sodass dann der Verbrennungsmotor 2 aus eigener Kraft heraus den Startvorgang fortsetzen kann. Nachfolgend wird die zweite, reibschlüssige Kupplung 11 weiterhin synchronisiert und nachfolgend geschlossen.

Es sei darauf hingewiesen, dass die in Fig. 1 gezeigte Gangzuordnung der Gänge zu den Teilgetrieben 5 und 6 des Getriebes 4 unterschiedlich sein kann. Es ist also nicht zwingend erforderlich, dass das erste Teilgetriebe 5 ungerade Gänge und das zweite Teilgetriebe 6 gerade Gänge bereitstellt. Um eine Lastschaltbarkeit über die elektrische Maschine 3 zu gewährleisten, sollen jedoch die Gänge des zweiten Teilgetriebes 6, an dessen Eingangswelle 8 die elektrische Maschine 3 angreift, nicht direkt benachbarte Gänge sein. Vorzugsweise weist das zweite Teilgetriebe 6, an dessen Eingangswelle 8 die elektrische Maschine 3 angreift, mindestens zwei elektrische Fahrgänge auf, mit denen bezüglich der elektrischen Maschine 3 der gesamte Geschwindigkeitsbereich abgedeckt werden kann. Diese dienen dann vorzugsweise auch als Stützgänge für Schaltungen bzw. Gangwechsel.

Im Fahrbetrieb kann der Hybridantrieb 1 so betrieben werden, dass der Kraftfluss der elektrischen Maschine 3 ausschließlich über das zweite Teilgetriebe 6 wirkt. Der Verbrennungsmotor 2 kann dann jederzeit durch Öffnen der ersten Kupplung 10 vom Getriebe 4 abgekoppelt werden. Für ein nachfolgendes Ankoppeln desselben stehen dann alle Gange des ersten Teilgetriebes 5 und der aktuelle Gang des zweiten Teilgetriebes 6 zu Verfügung. Dies ist vorteilhaft, da sich bei abgekoppeltem Verbrennungsmotor 2 die Geschwindigkeit des Kraftfahrzeugs stark ändern kann, insbesondere beim regenerativem Bremsen, sodass zum nachfolgenden Ankoppeln des Verbrennungsmotor 2 ein kleinerer Gang benötigt wird als zum Zeitpunkt des Abkoppelns desselben.

Wie oben ausgeführt, ist der Verbrennungsmotor 2 über die erste, reibschlüssige oder formschlüssige Kupplung 10 vom Getriebe 4 abkoppelbar. Bei erster, reibschlüssige Kupplung 10 ist ein Schleppstart des Verbrennungsmotors 2 aus einer elektrischen Fahrt heraus und ein Abkoppeln des Verbrennungsmotors 2 unter Last möglich. Über die erste Kupplung 10 und das formschlüssige Schaltelement 13 ist der Verbrennungsmotor 2 mit der elektrischen Maschine 3 koppelbar. Bei geschlossenem formschlüssigem Schaltelement 13 kann der Verbrennungsmotor 2 die Gänge des zweiten Teilgetriebes 6 nutzen. Die elektrische Maschine 3 kann über das formschlüssige Schaltelement 13 an die Zwischenwelle 14 gekoppelt werden. Bei geöffnetem formschlüssigem Schaltelement 13 ist ein elektrisches Fahren ohne Schleppverluste einer offenen reibschlüssigen Kupplung möglich. Über die zweite, reibschlüssige Kupplung 11 ist der Verbrennungsmotor 2 an das erste Teilgetriebe koppelbar. Das Zusammenspiel von zweiter, reibschlüssiger Kupplung 11 und formschlüssigem Schaltelement 13 ermöglicht ein verzögerungsfreies Anfahren aus dem Ladebetrieb der elektrischen Maschine 3 heraus, eine Schlupfentkopplung beim Zustarten des Verbrennungsmotors 2, rein elektrische Lastschaltung unter Nutzung der zweiten, reibschlüssigen Kupplung 11 als Lastschaltelement sowie ein Zustarten des Verbrennungsmotors 2 während der Ausführung von Lastschaltungen bei elektrischer Fahrt.

### Bezugszeichen

- 1: Hybridantrieb
- 2: Verbrennungsmotor
- 3: elektrische Maschine
- 4: Getriebe
- 5: erstes Teilgetriebe
- 6: zweites Teilgetriebe
- 7: erste Eingangswelle
- 8: zweite Eingangswelle
- 9: Ausgangswelle
- 10: formschlüssige oder reibschlüssige Kupplung
- 11: reibschlüssige Kupplung
- 12: Schaltpaket
- 13: Schaltelement
- 14: Wellenabschnitt

## Patentansprüche

1. Hybridantrieb eines Kraftfahrzeugs, mit einem Verbrennungsmotor (2), mit einer elektrischen Maschine (3) und mit einem Getriebe (4), wobei das Getriebe (4) als mehrstufiges Schaltgetriebe mit zwei Teilgetrieben (5, 6), die jeweils eine separate Eingangswelle (7, 8) und eine gemeinsame Ausgangswelle (9) aufweisen, ausgebildet ist, wobei eine erste Eingangswelle (7) eines ersten Teilgetriebes (5) an den Verbrennungsmotor (2) koppelbar und von demselben abkoppelbar ist, wobei eine zweite Eingangswelle (8) eines zweiten Teilgetriebes (6) fest mit der elektrischen Maschine (3) gekoppelt ist, und wobei beide Eingangswellen (7, 8) über formschlüssige Schaltelemente der Teilgetriebe (5, 6) selektiv mit der gemeinsamen Ausgangswelle (9) koppelbar sind, **dadurch gekennzeichnet, dass** der ersten Einganswelle (7) des ersten Teilgetriebes (5) mehrere Kupplungen (10, 11) derart zugeordnet sind, dass dann, wenn eine erste, reibschlüssige oder formschlüssige Kupplung (10) und eine in Reihe zwischen die erste Kupplung (10) und das erste Teilgetriebe (5) geschaltete zweite, reibschlüssige Kupplung (11) beide geschlossen sind, der Verbrennungsmotor (2) des Hybridantriebs an die erste Eingangswelle (7) und damit an das erste Teilgetriebe (5) gekoppelt ist, wohingegen dann, wenn zumindest eine der Kupplungen (10, 11) geöffnet ist, der Verbrennungsmotor (2) von der ersten Eingangswelle (7) und damit von dem ersten Teilgetriebe (5) abgekoppelt ist, und dass der zweiten Eingangswelle (8) des zweiten Teilgetriebes (6) ein formschlüssiges Schaltelement (13) derart zugeordnet ist, dass dann, wenn das formschlüssige Schaltelement (13) geschlossen ist, die elektrische Maschine (3) des Hybridantriebs weiterhin an einen zwischen den Kupplungen (10, 11) verlaufenden Wellenabschnitt (14) gekoppelt ist.

2. Hybridantrieb nach Anspruch 1, **dadurch gekennzeichnet, dass** dann, wenn das formschlüssige Schaltelement (13) und die erste Kupplung (10) geschlossen sind sowie die zweite Kupplung (11) geöffnet ist, die elektrische Maschine (3) an den Verbrennungsmotor (2) und damit der Verbrennungsmotor (2) zusammen mit der elektrischen Maschine (3) an die zweite Eingangswelle (8) des zweiten Teilgetriebes (6) gekoppelt ist.

3. Hybridantrieb nach Anspruch 1 oder 2, **dadurch gekennzeichnet, dass** dann, wenn das formschlüssige Schaltelement (13) und die zweite Kupplung (11) geschlossen sind sowie die erste Kupplung (10) geöffnet ist, die elektrische Maschine (3) sowohl an die erste Eingangswelle (7) des ersten Teilgetriebes (5) als auch an die zweite Eingangswelle (8) des zweiten Teilgetrieben (6) gekoppelt ist.

4. Hybridantrieb nach einem der Ansprüche 1 bis 3, **dadurch gekennzeichnet, dass** dann, wenn die erste und die zweite Kupplung (10, 11) geschlossen sind, die elektrische Maschine (3) bei geschlossenem formschlüssigen Schaltelement (13) sowohl an die erste Eingangswelle (7) des ersten Teilgetriebes als auch an die zweite Eingangswelle (8) des zweiten Teilgetrieben (6) gekoppelt und bei geöffnetem formschlüssigen Schaltelement (13) ausschließlich an die zweite Eingangswelle (8) des zweiten Teilgetrieben (6) gekoppelt ist.

5. Hybridantrieb nach einem der Ansprüche 1 bis 3, **dadurch gekennzeichnet, dass** die Eingangswellen (7, 8) der beiden Teilgetriebe (5, 6) koaxial zueinander angeordnet sind.

6. Verfahren zum Betreiben eines Hybridantriebs nach einem der Ansprüche 1 bis 5, **dadurch gekennzeichnet, dass** zur Ausführung eines Gangswechsels von einem Ist-Gang des ersten Teilgetriebes (5) des Getriebes (4) in einen Ziel-Gang des zweiten Teilgetriebes (6) des Getriebes (4) ausgehend von einer verbrennungsmotorischen Fahrt des Kraftfahrzeugs bei geschlossenen Kupplungen (10, 11) und bei geöffnetem formschlüssigem Schaltelement (13) zunächst der Ziel-Gang des zweiten Teilgetriebes (6) synchronisiert und sodann eingelegt wird, anschließend an der elektrischen Maschine (3) Last aufgebaut und an dem Verbrennungsmotor (2) Last abgebaut sowie bedarfsweise mindestens eine der Kupplungen (10, 11), vorzugsweise zumindest die zweite, reibschlüssige Kupplung (11), geöffnet wird, darauffolgend der Ist-Gang des ersten Teilgetriebes (5) ausgelegt und das Schaltelement (13) synchronisiert und geschlossen wird, und anschließend an der elektrischen Maschine (3) Last abgebaut und an dem Verbrennungsmotor (2) Last aufgebaut sowie bedarfsweise die jeweilige Kupplung (10, 11) geschlossen wird.

7. Verfahren zum Betreiben eines Hybridantriebs nach einem der Ansprüche 1 bis 5, **dadurch gekennzeichnet, dass** zur Ausführung eines Gangswechsels von einem Ist-Gang des zweiten Teilgetriebes (6) des Getriebes (4) in einen Ziel-Gang des ersten Teilgetriebe (5) des Getriebes (4) ausgehend von einer verbrennungsmotorischen Fahrt des Kraftfahrzeugs bei geschlossenen Kupplungen (10, 11) und bei geschlossenem formschlüssigem Schaltelement (13) zunächst an der elektrischen Maschine (3) des Hybridantriebs Last aufgebaut und an dem Verbrennungsmotor (2) des Hybridantriebs Last abgebaut, das formschlüssige Schaltelement (13) geöffnet sowie bedarfsweise mindestens eine der Kupplungen (10, 11), vorzugsweise zumindest die zweite, reibschlüssige Kupplung (11), geöffnet wird, darauffolgend der Ziel-Gang des ersten Teilgetriebes (5) synchronisiert und sodann eingelegt wird, darauffolgend an der elektrischen Maschine (3) des Hybridantriebs Last abgebaut und an dem Verbrennungsmotor (2) des Hybridantriebs Last aufgebaut sowie bedarfsweise die jeweilige Kupplung (10, 11) geschlossen wird.

8. Verfahren zum Betreiben eines Hybridantriebs nach einem der Ansprüche 1 bis 5, **dadurch gekennzeichnet, dass** zur Ausführung eines Gangswechsels von einem Ist-Gang des ersten Teilgetriebes (5) des Getriebes (4) in einen Ziel-Gang des ersten Teilgetriebe (5) des Getriebes (4) ausgehend von einer verbrennungsmotorischen Fahrt des Kraftfahrzeugs bei geschlossenen Kupplungen (10, 11) und bei geöffnetem formschlüssigem Schaltelement (13) zunächst im zweiten Teilgetriebe (6) ein Zwischengang synchronisiert und eingelegt wird, anschließend an der elektrischen Maschine (3) des Hybridantriebs Last aufgebaut und an dem Verbrennungsmotor (2) des Hybridantriebs Last abgebaut sowie bedarfsweise mindestens eine der Kupplungen (10, 11), vorzugsweise zumindest die zweite, reibschlüssige Kupplung (11), geöffnet wird, darauffolgend der Ist-Gang des ersten Teilgetriebes (5) ausgelegt sowie der Ziel-Gang des ersten Teilgetriebes (5) synchronisiert und eingelegt wird, anschließend zur Gewährleistung eines Lastübergangs von der elektrischen Maschine (3) des Hybridantriebs zurück auf den Verbrennungsmotor (2) des Hybridantriebs an der elektrischen Maschine (3) Last abgebaut und an dem Verbrennungsmotor (2) Last aufgebaut sowie bedarfsweise die jeweilige Kupplung (10, 11) geschlossen wird.

9. Verfahren zum Betreiben eines Hybridantriebs nach einem der Ansprüche 1 bis 5, **dadurch gekennzeichnet, dass** zur Ausführung eines Gangswechsels von einem Ist-Gang des zweiten Teilgetriebes (6) in einen Ziel-Gang des zweiten Teilgetriebes (6) ausgehend von einer verbrennungsmotorischen Fahrt des Kraftfahrzeugs bei geschlossenen Kupplung (10, 11) und bei geschlossenem formschlüssigem Schaltelement (13) zunächst an der elektrischen Maschine (3) Last aufgebaut und an dem Verbrennungsmotor (2) Last abgebaut, das formschlüssige Schaltelement (13) geöffnet sowie bedarfsweise mindestens eine der Kupplungen (10, 11) geöffnet wird, anschließend ein Zwischengang des ersten Teilgetriebes (5) synchronisiert und eingelegt wird, anschließend an der elektrischen Maschine (3) Last abgebaut und an dem Verbrennungsmotor (2) Last aufgebaut sowie bedarfsweise die jeweilige Kupplung (10, 11) geschlossen wird, drauffolgend der Ist-Gang des zweiten Teilgetriebes (6) ausgelegt sowie der Ziel-Gang desselben synchronisiert und eingelegt wird, anschließend an der elektrischen Maschine (3) Last aufgebaut und an dem Verbrennungsmotor (2) Last abgebaut sowie bedarfsweise mindestens eine der Kupplungen (10, 11) geöffnet wird, anschließend der Zwischengang des ersten Teilgetriebes (5) ausgelegt wird und das formschlüssige Schaltelement (13) synchronisiert und eingelegt wird, und darauffolgend an der elektrischen Maschine (3) Last abgebaut und an dem Verbrennungsmotor (2) Last aufgebaut sowie bedarfsweise die jeweilige Kupplung (10, 11) geschlossen wird.

10. Verfahren zum Betreiben eines Hybridantriebs nach einem der Ansprüche 1 bis 5, **dadurch gekennzeichnet, dass** bei rein elektrischer Fahrt über das zweite Teilgetriebe (6), an dessen Eingangswelle (8) die elektrische Maschine (3) fest gekoppelt, bei geöffneten Kupplungen (10, 11) und geöffnetem Schaltelement (13) ein Gangwechsel vom einem Ist-Gang des zweiten Teilgetriebes (6) auf einen Ziel-Gang des ersten Teilgetriebes (5) derart ausgeführt wird, dass in dem ersten Teilgetriebe (5) der Ziel-Gang synchronisiert und eingelegt sowie das Schaltelement (13) ebenfalls synchronisiert und geschlossen wird, und dass die zweite Kupplung (11) soweit geschlossen wird, dass das zweite Teilgetriebe (6) lastfrei wird, wobei bei lastfreiem zweiten Teilgetriebe (6) der Ist-Gang im zweiten Teilgetriebe (6) ausgelegt, und nachfolgend die zweite Kupplung (11) geschlossen wird.

11. Verfahren zum Betreiben eines Hybridantriebs nach einem der Ansprüche 1 bis 5, **dadurch gekennzeichnet, dass** bei rein elektrischer Fahrt über das erste Teilgetriebe (5), bei geöffneter erster Kupplung (10), bei geschlossener zweiter Kupplung (11) und geschlossenem Schaltelement (13) ein Gangwechsel vom einem Ist-Gang des ersten Teilgetriebes (5) auf einen Ziel-Gang des zweiten Teilgetriebes (6) derart ausgeführt wird, dass zunächst die zweite Kupplung (11) in Schlupf gebracht wird, anschließend der Ziel-Gang im zweiten Teilgetriebe (6) synchronisiert und eingelegt wird, nachfolgend die zweite Kupplung (11) weiter geöffnet, bedarfsweise das Schaltelement (13) geöffnet wird darauffolgend bedarfsweise der Ist-Gang im ersten Teilgetriebe (5) ausgelegt wird.

12. Verfahren zum Betreiben eines Hybridantriebs nach einem der Ansprüche 1 bis 5, **dadurch gekennzeichnet, dass** bei rein elektrischer Fahrt über das zweite Teilgetriebe (6), an dessen Eingangswelle (8) die elektrische Maschine (3) fest gekoppelt, bei geöffneten Kupplungen (10, 11) und geöffnetem Schaltelement (13) ein Gangwechsel vom einem Ist-Gang des zweiten Teilgetriebes (6) auf einen Ziel-Gang des ersten Teilgetriebes (5) unter Zustarten des Verbrennungsmotors (2) derart ausgeführt wird, dass in dem ersten Teilgetriebe (5) der Ziel-Gang synchronisiert und eingelegt sowie das Schaltelement (13) ebenfalls synchronisiert und geschlossen wird, und dass die zweite Kupplung (11) soweit geschlossen wird, dass das zweite Teilgetriebe (6) lastfrei wird, wobei bei lastfreiem zweiten Teilgetriebe (6) der Ist-Gang im zweiten Teilgetriebe (6) ausgelegt, nachfolgend die zweite Kupplung (11) unter Last synchronisiert und zeitlich überlappend durch Schließen der ersten, reibschlüssigen Kupplung (10) der Verbrennungsmotor (2) angeschleppt wird, wobei nach dem Anschleppen des Verbrennungsmotors (2) die erste Kupplung (10) bedarfsweise wieder geöffnet und die zweite Kupplung (11) nachfolgend geschlossen wird.

13. Verfahren zum Betreiben eines Hybridantriebs nach einem der Ansprüche 1 bis 5, **dadurch gekennzeichnet, dass** bei rein elektrischer Fahrt über das erste Teilgetriebe (5) bei geöffneter erster Kupplung (10), bei geschlossener zweiter Kupplung (11) und bei geschlossenem Schaltelement (13) zum Zustarten des Verbrennungsmotors (2) die zweite Kupplung (11) in Schlupf gebracht, die Drehzahl der elektrische Maschine (3) bedarfsweise erhöht und durch Schließen der ersten, reibschlüssigen Kupplung (10) der Verbrennungsmotor (2) angeschleppt wird.

14. Verfahren zum Betreiben eines Hybridantriebs nach einem der Ansprüche 1 bis 5, **dadurch gekennzeichnet, dass** dann, wenn das Kraftfahrzeug steht, zum generatorischen Betrieb der elektrischen Maschine (3) das formschlüssige Schaltelement (13) geschlossen, im ersten Teilgetriebe (5) ein Anfahrgang eingelegt, im zweiten Teilgetriebe (6) eine Neutralposition eingelegt, die erste Kupplung (10) geschlossen und die zweite, reibschlüssige Kupplung (11) maximal bis zum Anlegepunkt derselben geschlossen wird, wobei zum nachfolgenden Anfahren oder Ankriechen die zweite, reibschlüssige Kupplung (11) über den Anlegepunkt hinaus geschlossen wird.

## Claims

1. Hybrid drive of a motor vehicle, having an internal combustion engine (2), having an electric machine (3) and having a transmission (4), the transmission (4) being configured as a multiple-stage manual transmission with two component transmissions (5, 6) which in each case have a separate input shaft (7, 8) and a common output shaft (9), it being possible for a first input shaft (7) of a first component transmission (5) to be coupled to the internal combustion engine (2) and to be decoupled from the latter, a second input shaft (8) of a second component transmission (6) being coupled fixedly to the electric machine (3), and it being possible for both input shafts (7, 8) to be coupled selectively to the common output shaft (9) via positively locking shifting elements of the component transmissions (5, 6), **characterized in that** the first input shaft (7) of the first component transmission (5) is assigned a plurality of clutches (10, 11) in such a way that, when a first, frictionally locking or positively locking clutch (10) and a second, frictionally locking clutch (11) which is connected in series between the first clutch (10) and the first component transmission (5) are both closed, the internal combustion engine (2) of the hybrid drive is coupled to the first input shaft (7) and therefore to the first component transmission (5), whereas, when at least one of the clutches (10, 11) is open, the internal combustion engine (2) is decoupled from the first input shaft (7) and therefore from the first component transmission (5), and **in that** the second input shaft (8) of the second component transmission (6) is assigned a positively locking shifting element (13) in such a way that, when the positively locking shifting element (13) is closed, the electric machine (3) of the hybrid drive is still coupled to a shaft section (14) which runs between the clutches (10, 11).

2. Hybrid drive according to Claim 1, **characterized in that**, when the positively locking shifting element (13) and the first clutch (10) are closed and the second clutch (11) is open, the electric machine (3) is coupled to the internal combustion engine (2), and therefore the internal combustion engine (2) together with the electric machine (3) is coupled to the second input shaft (8) of the second component transmission (6).

3. Hybrid drive according to Claim 1 or 2, **characterized in that**, when the positively locking shifting element (13) and the second clutch (11) are closed and the first clutch (10) is open, the electric machine (3) is coupled both to the first input shaft (7) of the first component transmission (5) and to the second input shaft (8) of the second component transmission (6).

4. Hybrid drive according to one of Claims 1 to 3, **characterized in that**, when the first and the second clutch (10, 11) are closed, the electric machine (3) is coupled both to the first input shaft (7) of the first component transmission and to the second input shaft (8) of the second component transmission (6) if the positively locking shifting element (13) is closed, and is coupled exclusively to the second input shaft (8) of the second component transmission (6) if the positively locking shifting element (13) is open.

5. Hybrid drive according to one of Claims 1 to 3, **characterized in that** the input shafts (7, 8) of the two component transmissions (5, 6) are arranged coaxially with respect to one another.

6. Method for operating a hybrid drive according to one of Claims 1 to 5, **characterized in that**, in order to carry out a gear change from a current gear of the first component transmission (5) of the transmission (4) into a target gear of the second component transmission (6) of the transmission (4), starting from internal combustion engine propulsion of the motor vehicle with closed clutches (10, 11) and with an open positively locking shifting element (13), first of all the target gear of the second component transmission (6) is synchronized and is then engaged, subsequently load is built up at the electric machine (3) and load is dissipated at the internal combustion engine (2) and, if required, at least one of the clutches (10, 11), preferably at least the second, frictionally locking clutch (11), is opened, subsequently the current gear of the first component transmission (5) is disengaged and the shifting element (13) is synchronized and closed, and subsequently load is dissipated at the electric machine (3) and load is built up at the internal combustion engine (2) and, if required, the respective clutch (10, 11) is closed.

7. Method for operating a hybrid drive according to one of Claims 1 to 5, **characterized in that**, in order to carry out a gear change from a current gear of the second component transmission (6) of the transmission (4) into a target gear of the first component transmission (5) of the transmission (4), starting from internal combustion engine propulsion of the motor vehicle with closed clutches (10, 11) and with a closed positively locking shifting element (13), first of all load is built up at the electric machine (3) of the hybrid drive and load is dissipated at the internal combustion engine (2) of the hybrid drive, the positively locking shifting element (13) is opened and, if required, at least one of the clutches (10, 11), preferably at least the second, frictionally locking clutch (11), is opened, subsequently the target gear of the first component transmission (5) is synchronized and then engaged, subsequently load is dissipated at the electric machine (3) of the hybrid drive and load is built up at the internal combustion engine (2) of the hybrid drive and, if required, the respective clutch (10, 11) is closed.

8. Method for operating a hybrid drive according to one of Claims 1 to 5, **characterized in that**, in order to carry out a gear change from a current gear of the first component transmission (5) of the transmission (4) into a target gear of the first component transmission (5) of the transmission (4), starting from internal combustion engine propulsion of the motor vehicle with closed clutches (10, 11) and with an open positively locking shifting element (13), first of all an intermediate gear is synchronized and engaged in the second component transmission (6), subsequently load is built up at the electric machine (3) of the hybrid drive and load is dissipated at the internal combustion engine (2) of the hybrid drive and, if required, at least one of the clutches (10, 11), preferably at least the second, frictionally locking clutch (11), is opened, subsequently the current gear of the first component transmission (5) is disengaged and the target gear of the first component transmission (5) is synchronized and engaged, subsequently, in order to ensure a load transition from the electric machine (3) of the hybrid drive back to the internal combustion engine (2) of the hybrid drive, load is dissipated at the electric machine (3) and load is built up at the internal combustion engine (2) and, if required, the respective clutch (10, 11) is closed.

9. Method for operating a hybrid drive according to one of Claims 1 to 5, **characterized in that**, in order to carry out a gear change from a current gear of the second component transmission (6) into a target gear of the second component transmission (6), starting from internal combustion engine propulsion of the motor vehicle with closed clutches (10, 11) and with a closed positively locking shifting element (13), first of all load is built up at the electric machine (3) and load is dissipated at the internal combustion engine (2), the positively locking shifting element (13) is opened and, if required, at least one of the clutches (10, 11) is opened, subsequently an intermediate gear of the first component transmission (5) is synchronized and engaged, subsequently load is dissipated at the electric machine (3) and load is built up at the internal combustion engine (2) and, if required, the respective clutch (10, 11) is closed, subsequently the current gear of the second component transmission (6) is disengaged and the target gear of the latter is synchronized and engaged, subsequently load is built up at the electric machine (3) and load is dissipated at the internal combustion engine (2) and, if required, at least one of the clutches (10, 11) is opened, subsequently the intermediate gear of the first component transmission (5) is disengaged and the positively locking shifting element (13) is synchronized and engaged, and subsequently load is dissipated at the electric machine (3) and load is built up at the internal combustion engine (2) and, if required, the respective clutch (10, 11) is closed.

10. Method for operating a hybrid drive according to one of Claims 1 to 5, **characterized in that**, in the case of purely electric propulsion via the first component transmission (6), to the input shaft (8) of which the electric machine (3) is fixedly coupled, with open clutches (10, 11) and an open shifting element (13), a gear change from a current gear of the second component transmission (6) to a target gear of the first component transmission (5) is carried out in such a way that, in the first component transmission (5), the target gear is synchronized and engaged and the shifting element (13) is likewise synchronized and closed, and that the second clutch (11) is closed to such an extent that the second component transmission (6) becomes load-free, the current gear in the second component transmission (6) being disengaged in the case of a load-free second component transmission (6), and subsequently the second clutch (11) being closed.

11. Method for operating a hybrid drive according to one of Claims 1 to 5, **characterized in that**, in the case of purely electric propulsion via the first component transmission (5), with an open first clutch (10), with a closed second clutch (11) and a closed shifting element (13), a gear change from a current gear of the first component transmission (5) to a target gear of the second component transmission (6) is carried out in such a way that first of all the second clutch (11) is caused to slip, subsequently the target gear in the second component transmission (6) is synchronized and engaged, subsequently the second clutch (11) is opened further, if required the shifting element (13) is opened, and subsequently, if required, the current gear in the first component transmission (5) is disengaged.

12. Method for operating a hybrid drive according to one of Claims 1 to 5, **characterized in that**, in the case of purely electric propulsion via the second component transmission (6), to the input shaft (8) of which the electric machine (3) is fixedly coupled, with open clutches (10, 11) and an open shifting element (13), a gear change from a current gear of the second component transmission (6) to a target gear of the first component transmission (5) with starting of the internal combustion engine (2) is carried out in such a way that, in the first component transmission (5), the target gear is synchronized and engaged and the shifting element (13) is likewise synchronized and closed, and that the second clutch (11) is closed to such an extent that the second component transmission (6) becomes load-free, the current gear in the second component transmission (6) being disengaged in the case of a load-free second component transmission (6), subsequently the second clutch (11) being synchronized under load and the internal combustion engine (2) being turned over in a temporally overlapping manner by way of closure of the first, frictionally locking clutch (10), the first clutch (10) being opened again, if required, and the second clutch (11) subsequently being closed after turning over of the internal combustion engine (2).

13. Method for operating a hybrid drive according to one of Claims 1 to 5, **characterized in that**, in the case of purely electric propulsion via the first component transmission (5) with an open first clutch (10), with a closed second clutch (11) and with a closed shifting element (13), in order to start the internal combustion engine (2) the second clutch (11) is caused to slip, the rotational speed of the electric machine (3) is increased, if required, and the internal combustion engine (2) is turned over by way of closure of the first, frictionally locking clutch (10).

14. Method for operating a hybrid drive according to one of Claims 1 to 5, **characterized in that**, when the motor vehicle is at a standstill, for generator operation of the electric machine (3), the positively locking shifting element (13) is closed, a starting gear is engaged in the first component transmission (5), a neutral position is engaged in the second component transmission (6), the first clutch (10) is closed and the second, frictionally locking clutch (11) is closed at most as far as the application point thereof, the second, frictionally locking clutch (11) being closed beyond the application point for subsequently driving away or crawling away.

## Revendications

1. Entraînement hybride de véhicule automobile, présentant un moteur (2) à combustion interne, une machine électrique (3) et une transmission (4),
la transmission (4) étant configurée comme transmission à plusieurs rapports dotée de deux transmissions partielles (5, 6) qui présentent chacune un arbre d'entrée (7, 8) séparé et un ordre de sortie commun (9),
un premier arbre d'entrée (7) d'une première transmission partielle (5) pouvant être accouplé au moteur (2) à combustion interne et pouvant être désaccouplé de ce dernier,
un deuxième arbre d'entrée (8) d'une deuxième transmission partielle (6) étant accouplé fixement à la machine électrique (3),
les deux arbres d'entrée (7, 8) pouvant être accouplés sélectivement à l'arbre de sortie (9) commun par l'intermédiaire d'éléments de changement de rapport en correspondance géométrique des transmissions partielles (5, 6),
**caractérisé en ce que**
plusieurs embrayages (10, 11) sont associés au premier arbre d'entrée (7) de la première transmission partielle (5) de telle sorte que lorsqu'un premier embrayage (10) agissant par frottement ou en correspondance géométrique et un deuxième embrayage (11) travaillant par frottement, à raccorder en série entre le premier embrayage (10) et la première transmission partielle (5), sont tous deux fermés, le moteur (2) à combustion interne de l'entraînement hybride est accouplé au premier arbre d'entrée (7) et donc à la première transmission partielle (5), et que si au moins l'un des embrayages (10, 11) est ouvert, le moteur (2) à combustion interne est désaccouplé du premier arbre d'entrée (7) et donc de la première transmission partielle (5) et
**en ce qu'**un élément (13) de changement de rapport en correspondance géométrique est associé au deuxième arbre d'entrée (8) de la deuxième transmission partielle (6) de telle sorte que lorsque l'élément (13) de changement de rapport en correspondance géométrique est fermé, la machine électrique (3) de l'entraînement hybride est en outre accouplée à une section d'arbre (14) qui s'étend entre les embrayages (10, 11).

2. Entraînement hybride selon la revendication 1, **caractérisé en ce que** lorsque l'élément (13) de changement de rapport en correspondance géométrique et le premier embrayage (10) sont fermés et que le deuxième embrayage (11) est ouvert, la machine électrique (3) est accouplée au moteur (2) à combustion interne et le moteur (2) à combustion interne est accouplé de même que la machine électrique (3) au deuxième arbre d'entrée (8) de la deuxième transmission partielle (6).

3. Entraînement hybride selon les revendications 1 ou 2, **caractérisé en ce que** si l'élément (13) de changement de rapport en correspondance géométrique et le deuxième embrayage (11) sont fermés et que le premier embrayage (10) est ouvert, la machine électrique (3) est accouplée à la fois au premier arbre d'entrée (7) de la première transmission partielle (5) et au deuxième arbre d'entrée (8) de la deuxième transmission partielle (6).

4. Entraînement hybride selon l'une des revendications 1 à 3, **caractérisé en ce que** si le premier et le deuxième embrayage (10, 11) sont fermés, lorsque l'élément (13) de changement de rapport en correspondance géométrique est fermé, la machine électrique (3) est accouplée à la fois au premier arbre d'entrée (7) de la première transmission partielle et au deuxième arbre d'entrée (8) de la deuxième transmission partielle (6) et lorsque l'élément (13) de changement de rapport en correspondance géométrique est ouvert, elle est accouplée uniquement au deuxième arbre d'entrée (8) de la deuxième transmission partielle (6).

5. Entraînement hybride selon l'une des revendications 1 à 3, **caractérisé en ce que** les arbres d'entrée (7, 8) des transmissions partielles (5, 6) sont disposés coaxialement l'un par rapport à l'autre.

6. Procédé de conduite d'un entraînement hybride selon l'une des revendications 1 à 5, **caractérisé en ce que** pour commuter d'un rapport actuel de la première transmission partielle (5) de la transmission (4) à un rapport visé de la deuxième transmission partielle (6) de la transmission (4), partant d'une conduite du véhicule automobile entraîné par combustion interne, les embrayages (10, 11) étant fermés et l'élément (13) de changement de rapport en correspondance géométrique étant ouvert, le rapport visé de la deuxième transmission partielle (6) est synchronisé et donc engagé, la charge est ensuite appliquée sur la machine électrique (3) et la charge est délestée du moteur (2) à combustion interne et si nécessaire, au moins l'un des embrayages (10, 11) et de préférence au moins le deuxième embrayage (11) travaillant par frottement est ouvert, le rapport effectif de la première transmission partielle (5) est ensuite désengagé et l'élément (13) de changement de rapport est synchronisé et fermé, la charge est ensuite délestée de la machine électrique (3) et la charge est appliquée sur le moteur (2) à combustion interne et si nécessaire, l'embrayage (10, 11) concerné est fermé.

7. Procédé de conduite d'un entraînement hybride selon l'une des revendications 1 à 5, **caractérisé en ce que** pour commuter d'un rapport actuel de la deuxième transmission partielle (6) de la transmission (4) à un rapport visé de la première transmission partielle (5) de la transmission (4), partant d'une conduite du véhicule automobile entraîné par combustion interne, les embrayages (10, 11) étant fermés et l'élément (13) de changement de rapport en correspondance géométrique étant fermé, la charge est d'abord délestée de la machine électrique (3) de l'entraînement hybride et la charge est appliquée sur le moteur (2) à combustion interne de l'entraînement hybride, l'élément (13) de changement de rapport en correspondance géométrique est ouvert et si nécessaire au moins l'un des embrayages (10, 11) et de préférence au moins le deuxième embrayage (11) travaillant en frottement est ouvert, le rapport visé de la première transmission partielle (5) est ensuite synchronisé et donc engagé, la charge est ensuite délestée de la machine électrique (3) de l'entraînement hybride et la charge est appliquée sur le moteur (2) à combustion interne de l'entraînement hybride et si nécessaire, l'embrayage (10, 11) concerné est fermé.

8. Procédé de conduite d'un entraînement hybride selon l'une des revendications 1 à 5, **caractérisé en ce que** pour commuter d'un rapport actuel de la première transmission partielle (5) de la transmission (4) à un rapport visé de la première transmission partielle (5) de la transmission (4), partant d'une conduite du véhicule automobile entraîné par combustion interne, les embrayages (10, 11) étant fermés et l'élément (13) de changement de rapport en correspondance géométrique étant ouvert, un rapport intermédiaire est d'abord synchronisé et engagé dans la deuxième transmission partielle (6), la charge est ensuite appliquée sur la machine électrique (3) de l'entraînement hybride et la charge est délestée du moteur (2) à combustion interne de l'entraînement hybride, si nécessaire au moins l'un des embrayages (10, 11) et de préférence au moins le deuxième embrayage (11) travaillant en frottement est ouvert, le rapport actuel de la première transmission partielle (5) est ensuite désengagé et le rapport visé de la première transmission partielle (5) est synchronisé et engagé et pour garantir le transfert de la charge de la machine électrique (3) de l'entraînement hybride au moteur (2) à combustion interne de l'entraînement hybride, la charge est délestée de la machine électrique (3) de l'entraînement hybride et la charge est appliquée sur le moteur (2) à combustion interne de l'entraînement hybride et si nécessaire, l'embrayage (10, 11) concerné est fermé.

9. Procédé de conduite d'un entraînement hybride selon l'une des revendications 1 à 5, **caractérisé en ce que** pour commuter d'un rapport actuel de la deuxième transmission partielle (6) à un rapport visé de la deuxième transmission partielle (6), partant d'une conduite du véhicule automobile entraîné par combustion interne, les embrayages (10, 11) étant fermés et l'élément (13) de changement de rapport en correspondance géométrique étant fermé, la charge est d'abord délestée de la machine électrique (3) et la charge est appliquée sur le moteur (2) à combustion interne, l'élément (13) de changement de rapport en correspondance géométrique est ouvert et si nécessaire au moins l'un des embrayages (10, 11) est ouvert, un rapport intermédiaire de la première transmission partielle (5) est ensuite synchronisé et engagé, la charge est ensuite délestée de la machine électrique (3) et la charge est appliquée sur le moteur (2) à combustion interne, si nécessaire l'embrayage (10, 11) concerné est fermé, le rapport actuel de la deuxième transmission partielle (6) est ensuite désengagé et le rapport visé de cette même transmission partielle est synchronisé et engagé, la charge est ensuite appliquée sur la machine électrique (3) et la charge est délestée du moteur (2) à combustion interne et si nécessaire, au moins l'un des embrayages (10, 11) est ouvert, le rapport intermédiaire de la première transmission partielle (5) est désengagé et l'élément (13) de changement de rapport en correspondance géométrique est synchronisé et engagé, la charge est délestée de la machine électrique (3) et la charge est appliquée sur le moteur (2) à combustion interne et si nécessaire l'embrayage (10, 11) concerné est fermé.

10. Procédé de conduite d'un entraînement hybride selon l'une des revendications 1 à 5, **caractérisé en ce que** lorsque la conduite est purement électrique, un changement de rapport depuis un rapport actuel de la deuxième transmission partielle (6) à un rapport visé de la première transmission partielle (5) est réalisé par l'intermédiaire de la deuxième transmission partielle (6) à l'arbre d'entrée (8) de laquelle la machine électrique (3) est accouplée fixement, les embrayages (10, 11) étant ouverts et l'élément (13) de changement de rapport étant ouvert, de telle sorte que dans la première transmission partielle (5), le rapport visé est synchronisé et engagé et l'élément (13) de changement de rapport est également synchronisé et fermé, et **en ce que** le deuxième embrayage (11) est fermé jusqu'à ce que la deuxième transmission partielle (6) soit délestée de sa charge, le rapport actuel étant désengagé dans la deuxième transmission partielle (6) lorsque la deuxième transmission partielle (6) est délestée, le deuxième embrayage (11) étant ensuite fermé.

11. Procédé de conduite d'un entraînement hybride selon l'une des revendications 1 à 5, **caractérisé en ce que** lors d'une conduite purement moins électrique, un changement de rapport d'un rapport actuel de la première transmission partielle (5) à un rapport visé de la deuxième transmission partielle (6) est réalisé par l'intermédiaire de la première transmission partielle (5), le premier embrayage (10) étant ouvert, le deuxième embrayage (11) étant fermé et l'élément (13) de changement de rapport étant fermé, de telle sorte que le deuxième embrayage (11) est d'abord amené à patiner, le rapport visé dans la deuxième transmission partielle (6) est ensuite synchronisé et engagé, le deuxième embrayage (11) est encore ouvert, si nécessaire l'élément (13) de changement de rapport est ouvert, et ensuite, si nécessaire, le rapport actuel est désengagé dans la première transmission partielle (5).

12. Procédé de conduite d'un entraînement hybride selon l'une des revendications 1 à 5, **caractérisé en ce que** lors d'une conduite purement électrique, un changement de rapport depuis un rapport actuel de la deuxième transmission partielle (6) à un rapport visé de la première transmission partielle (5) est réalisé avec démarrage du moteur (2) à combustion interne, par l'intermédiaire de la deuxième transmission partielle (6) sur l'arbre d'entrée (8) duquel la machine électrique (3) est accouplée fixement, les embrayages (10, 11) étant ouverts et l'élément (13) de changement de rapport étant ouvert, de telle sorte que dans la première transmission partielle (5), le rapport visé est synchronisé et engagé et l'élément (13) de changement de rapport est également synchronisé et fermé, et que le deuxième embrayage (11) est fermé suffisamment pour que la deuxième transmission partielle (6) soit délestée de sa charge, le rapport actuel dans la deuxième transmission partielle (6) étant désengagé lorsque la deuxième transmission partielle (6) est délestée de sa charge, le deuxième embrayage (11) étant ensuite synchronisé en charge et, en superposition temporelle, le moteur (2) à combustion interne est entraîné en rotation par fermeture du premier embrayage (10) travaillant en frottement tandis qu'après mise en rotation du moteur (2) à combustion interne, le premier embrayage (10) est si nécessaire ouvert de nouveau et le deuxième embrayage (11) est ensuite fermé.

13. Procédé de conduite d'un entraînement hybride selon l'une des revendications 1 à 5, **caractérisé en ce que** lors d'une conduite purement électrique, par l'intermédiaire de la première transmission partielle (5), pour démarrer le moteur (2) à combustion interne, le premier embrayage (10) étant ouvert, le deuxième embrayage (11) étant fermé et l'élément (13) de changement de rapport étant fermé, le deuxième embrayage (11) est amené à patiner, la vitesse de rotation de la machine électrique (3) est si nécessaire augmentée et le moteur (2) à combustion interne est mis en rotation par fermeture du premier embrayage (10) travaillant par frottement.

14. Procédé de conduite d'un entraînement hybride selon l'une des revendications 1 à 5, **caractérisé en ce que** lorsque le véhicule automobile est à l'arrêt, pour faire fonctionner la machine électrique (3) en génératrice, l'élément (13) de changement de rapport en correspondance géométrique est fermé, un rapport de démarrage est engagé dans la première transmission partielle (5), une position neutre est engagée dans la deuxième transmission partielle (6), le premier embrayage (10) est fermé et le deuxième embrayage (11) travaillant en frottement est fermé au maximum jusqu'à son point d'application, tandis que pour le démarrage ou la remise en route qui suivent, le deuxième embrayage (11) travaillant en frottement est fermé au-delà du point d'application.
